# EUROPEAN PATENT APPLICATION

(11) **EP 1 868 270 A1**
(43) Date of publication of application: **19.12.2007**
(21) Application number: 07075495.7
(22) Date of filing: 13.06.2007
(51) Int. Cl.: H02G 3/08, H02G 3/12

(54) **Box for electrical wirings, provided with a spout**

(30) Priority: 13.06.2006 NL 1031992
(71) Applicant: ABB B.V., 6716 AA Ede (NL)
(72) Inventor: Kuipers, Johannes Doede Hendrik, 6715 EL Ede (NL)
(74) Representative: Bras, Pieter

(57) **Abstract**

Box for electric wirings, comprising a wall having a circumferential wall and a bottom wall, wherein the circumferential wall at the side facing away from the bottom defines an opening, wherein in the wall the box is provided with a spout projecting from the wall for connection to an installation pipe, wherein the spout is provided with a spout closing means comprising a membrane or sheet that can be punctured when introducing the installation pipe in the spout.

## Description

### BACKGROUND OF THE INVENTION

The invention relates to a box for electric wirings, wherein the box is provided with a number of spouts for connecting one or more installation pipes to the box. The invention particularly relates to such a box for electric wirings that is placed in concrete walls that are subsequently to be poured or cast.

After the box has been placed in the construction project, the installation pipes are connected thereto by insertion in the spout in question of the box. When not all spouts are utilised the inside of the box may remain in open contact with the surroundings via the open spout or spouts. During the subsequent pouring of concrete, concrete water may, via the spout(s), end up in the box and its other spouts, as a result of which after hardening obstructions may have been formed that may hamper the access for electric wires to the box.

In order to counteract this, boxes have been developed that consist of two members that are to be placed onto each other, of which each member is provided with a number of partial spouts that form a complete spout after joining. The partial spouts of one box member have been provided with an integrally formed break-out gate, projecting therefrom in transverse direction in order for in the joined condition closing off the cross-section of the complete spout from concrete water.

Such a box is expensive to manufacture. Two separate moulds are necessary for injection moulding both box members. Furthermore breaking through the break-through gates in the construction project is difficult, and tools are needed for that purpose.

It is an object of the invention to provide a box of the type mentioned in the preamble, of which the inside can be reliably shielded from poured concrete (water).

It is an object of the invention to provide a box of the type mentioned in the preamble, which in the construction project can easily be connected to installation pipes.

It is an object of the invention to provide a box of the type mentioned in the preamble that is easy to manufacture.

### SUMMARY OF THE INVENTION

According to one aspect the invention provides a box for electric wirings, comprising a wall having a circumferential wall and a bottom wall, wherein the circumferential wall at the side facing away from the bottom defines an opening, wherein in the wall the box is provided with a spout projecting from the wall for connection to an installation pipe, wherein the spout is provided with a spout closing means comprising a membrane or sheet that can be punctured when introducing the installation pipe in the spout.

After placing the box the electrician is able to puncture the gate in question without tools, using the installation pipe itself, and in the same movement connect the installation pipe to the box. When the spout does not need to be connected it remains closed.

In one embodiment the membrane or sheet is provided spaced apart from the wall, preferably at the end of the spout, as a result of which the spout in question, if, during the pouring of concrete, it will not be used for connection to an installation pipe, remains free of concrete water.

The moulding process of the box having such a membrane is facilitated when the spout closing means is movable with respect to the spout, for movement of the membrane or sheet between a position that does not cover the spout and a position that covers the spout. During manufacturing, the membrane in the position that does not cover can be brought into the closed position, (shortly or immediately) after manufacturing or prior to placement in the construction project.

In one embodiment the spout closing means is movably connected to the spout.

In one embodiment thereof the spout closing means comprises a lid or cover of which the membrane or sheet is a part, wherein the lid or cover is hinged to the spout. The hinge may for instance be a bending hinge or a living hinge.

In one embodiment the spout closing means comprises a sealing cap for the spout of which the membrane or sheet is a part. The cap and the box can then be manufactured and supplied individually to the location where the box is going to be used.

The sealing cap may close of the spout watertight when the sealing cap connects clampingly or so as to fit snugly to and/or around and/or against the spout, preferably around the inside of the spout and/or the outside of the spout.

In an easy to handle embodiment the sealing cap is designed like a slide-on cap.

In one embodiment the spout closing means is provided with locking means for locking the closing position, such as a snap connection. They may for instance be integrally formed with an edge of the closing means, which edge is made of rigid material.

In one embodiment that is easy to manufacture, the membrane or sheet is directly or indirectly integrally formed with the spout.

Preferably the membrane or sheet forms a liquid-inhibiting sealing for the spout.

In one embodiment the membrane or sheet, after having been punctured by the installation pipe, is suitable to abut the outer surface thereof, so that the membrane or sheet is then able to fulfil a sealing function against concrete water that ends up between the spout and the installation pipe inserted therein.

The membrane or sheet may be provided with a predetermined weakening of reduced thickness, preferably in the shape of a centrally situated straight line, a cross, an S, or an area. Alternatively the wall thickness of the sheet may decrease towards the centre. In this way it is enhanced that the membrane or sheet will rupture at locations spaced apart from its edge, and thus will be able to form sheet parts that will be able to nestle against the outer side of the pipe.

Alternatively the membrane or sheet is provided with a predetermined weakening of reduced thickness, preferably in the shape of one or several lines that define a predetermined flap in the membrane or sheet, wherein between the end points of the line or lines the membrane or sheet material forms a bridge towards the predetermined flap, wherein the predetermined weakening preferably has a substantially interrupted circular shape, a C-shape or a V-shape. The predetermined flap is able to move out of the plane of the membrane due to the pipe being inserted and nestle against the outer side of the pipe at a suitable location within the spout.

In a further development thereof, at the inside, the spout is provided with retaining means engaging onto an installation pipe for retaining an inserted installation pipe in the spout, wherein the box is provided with indexing means that are coupled to the membrane or sheet and the spout, for with respect to the centre line of the spout bringing or retaining the bridge substantially opposite the retaining means. In this way the predetermined flap will swing away from the retaining means when inserting the pipe. The retaining means are not hindered by it.

When the predetermined weakening lies spaced apart from the circumferential boundary of the membrane or sheet, the area between the predetermined weakening and the circumferential boundary can remain free from ruptures. This area can then abut the pipe for connecting the inserted pipe substantially watertight to the spout.

The moulding process is enhanced here when the lid comprises an edge encircling the membrane, which edge with respect to the membrane comprises rigid material.

From a further aspect the invention provides a box for electric wirings, comprising a wall having a circumferential wall and a bottom wall, wherein the circumferential wall at the side facing away from the bottom defines an opening, wherein in the wall the box is provided with a preferably one-part spout, projecting from the wall and integrally formed therewith, for connection to an installation pipe, wherein spaced apart from the wall, the spout is provided with a gate, sealing against liquid and puncturable by the pipe, such as a membrane or sheet. The puncturable gate can be made having a thickness smaller than half the thickness of the wall.

According to a further aspect, the invention provides a box for electric wirings, comprising a wall having a circumferential wall and a bottom wall, wherein the circumferential wall at the side facing away from the bottom defines an opening, wherein in the wall the box is provided with a spout projecting from the wall for connection to an installation pipe, wherein the box furthermore comprises a spout closing means for the spout, such as a cover, lid or cap, that is movable with respect to the spout. The spout closing means forms a potential closure for the spout in question which, in a position that does not close, can be integrally formed therewith. Due to the spout closing means the spout can be closed in order to prevent that in the construction project concrete water penetrates in said spout.

In one embodiment there are several spouts, each provided with a spout closing means. In that way there is more freedom in the possible directions of the spouts to be formed when manufacturing the box.

In one embodiment the spout closing means is at least partially manufactured of material that can be broken away or punctured. It is then also possible to open the -inadvertently- closed spouts, when the spout closing means in question cannot be opened.

In a further development thereof the spout closing means for several adjacent spouts are formed as one unity with each other. In case of a closed lid a wanted part of the spouts can then simply be punctured by installation pipes, whereas the other spout(s) remain(s) closed.

The aspects and measures described in this description and claims of the application and/or shown in the drawings of this application may where possible also be used individually. Said individual aspects may be the subject of divisional patent applications relating thereto. This particularly applies to the measures and aspects described per se in the various independent claims and sub claims. It is furthermore noted that the membranes or sheets provided with predetermined weakenings according to the invention can be used in all lids, covers or caps that may or may not have been provided with indexing means according to the invention.

### SHORT DESCRIPTION OF THE DRAWINGS

The invention will be elucidated on the basis of a number of exemplary embodiments shown in the attached drawings, in which:
Figure 1 shows a first embodiment of a box according to the invention in perspective;
Figure 2 shows a part of a second embodiment of a box according to the invention;
Figure 3 shows a part of a third embodiment of a box according to the invention;
Figure 4 shows a part of a fourth embodiment of a box according to the invention; and
Figure 5A-C show consecutive stages in placing a possible embodiment of a box according to the invention.

### DETAILED DESCRIPTION OF THE DRAWINGS

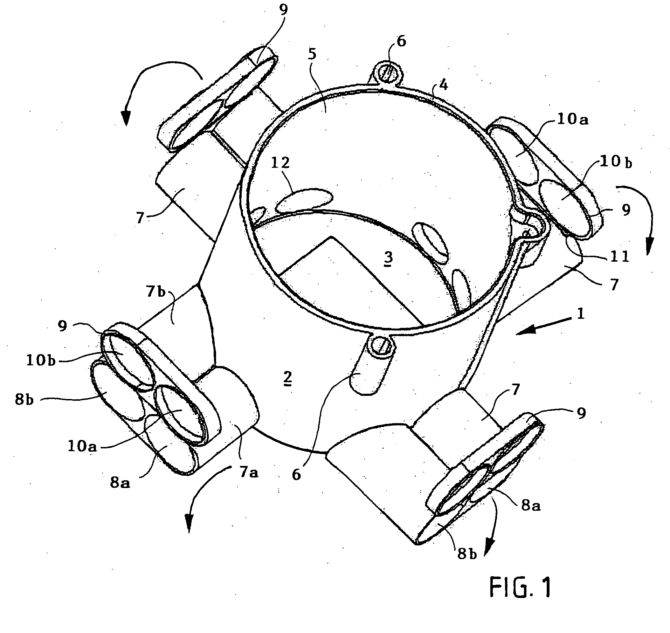

The box 1 in figure 1 comprises a circumferential wall 2 and a bottom 3 that are integrally formed with each other. At the upper edge 4 facing away from the bottom 3, an access opening 5 has been provided, for placing electric components in the box 1. Near the upper edge 4 the box is provided with fixing bushes 6.

At a short distance from the bottom wall 3 the circumferential wall 2 is provided with a number of double spouts 7 (single spouts are also possible), which have been integrally formed therewith and form openings 12 in the circumferential wall 2. At the opposite end spouts 7a, b are provided with openings 8a, 8b. In this example a double lid 9 is formed at the upper side of the end of the spouts 7a, 7b, which lid in this example is suitable for closing off both openings 8a, 8b. Alternatively one lid may be provided for each opening 8a, 8b, which lid in that case is half as large as the lid 9 shown. In this example, the lid 9 is connected as one unity to the spout 7a, 7b by means of a living hinge or bending hinge 11. Snap means that are not shown in figure 1 on the lid 9 and on the outer side of the spouts 7a, 7b make it possible to retain the lid 9 in a closed position, wherein the openings 8a, 8b are covered.

The lid 9 is provided with sheets 10a, 10b integrally formed therewith due to injection moulding, which sheets can be ruptured by inserting an installation pipe, so that the pipe is able to extend through the opening 8a or 8b. The sheets 10a, 10b form gates to the inside of the spouts 7a, 7b.

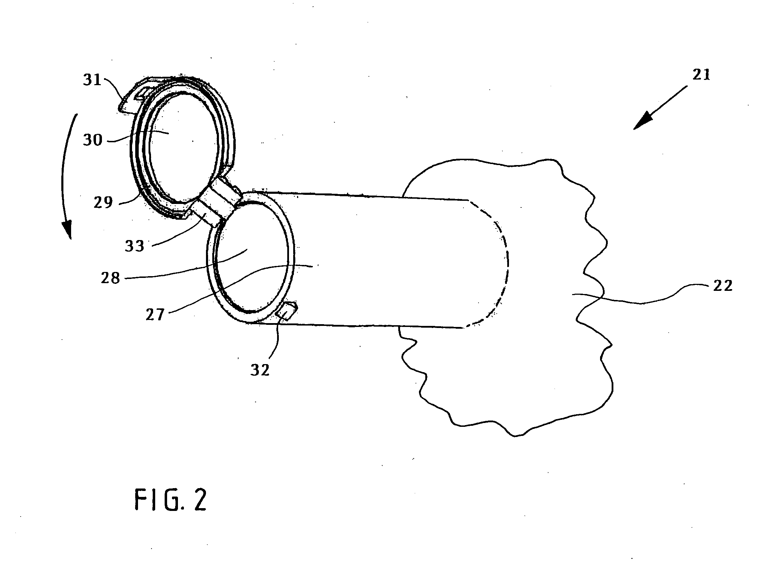

The box 21 (not entirely shown) in figure 2 has a circumferential wall 22 that is integrally formed with a bottom that is not shown. From the circumferential wall 22 a spout 27 extends, which at the end of the opening 28 is connected to a lid 29 by means of a hinge 33 that is integrally formed with the spout. The lid 29 is provided with a sheet 30 that can be punctured by an installation pipe. At the side facing away from the hinge 33 the lid 29 is furthermore provided with a snap plate 31 that may enter into a snap connection with snap projection 32 at the end of the spout 27.

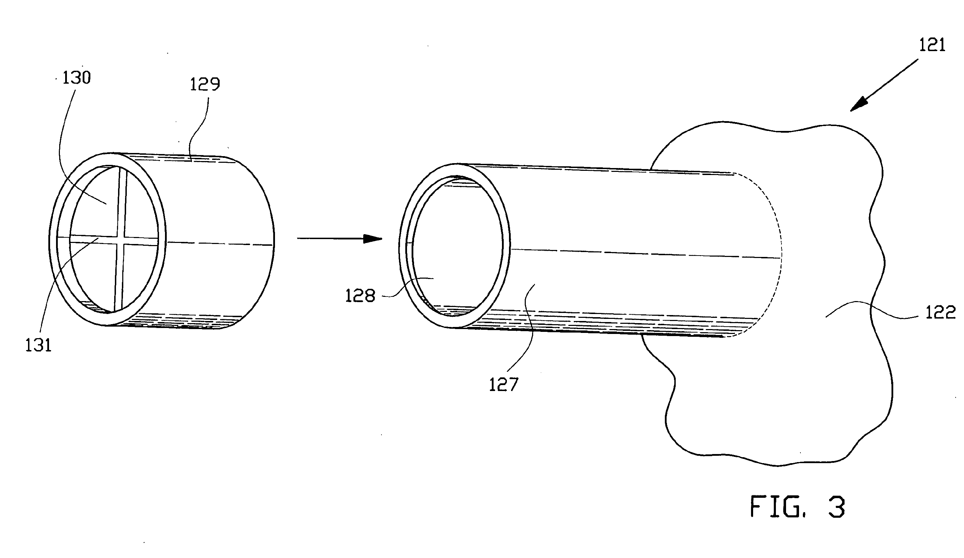

The box 121 (not entirely shown) in figure 3 has a circumferential wall 122 which is integrally formed with a bottom that is not shown. A single-part spout 127 having an opening 128 extends from the circumferential wall 122. A synthetic cap 129 to be slid over the spout 127 can close off the opening 128. The cap 129 slightly clampingly abuts the outer wall of the spout 127, and at the end is provided with a sheet 130 that can be punctured by an installation pipe, in which way the spout 127 is closed off watertight. In the example shown the sheet 130 is provided with a cross-shaped weakening 131 as a result of which the sheet will rupture over the lines of the cross. In an alternative embodiment only one straight-lined weakening is provided.

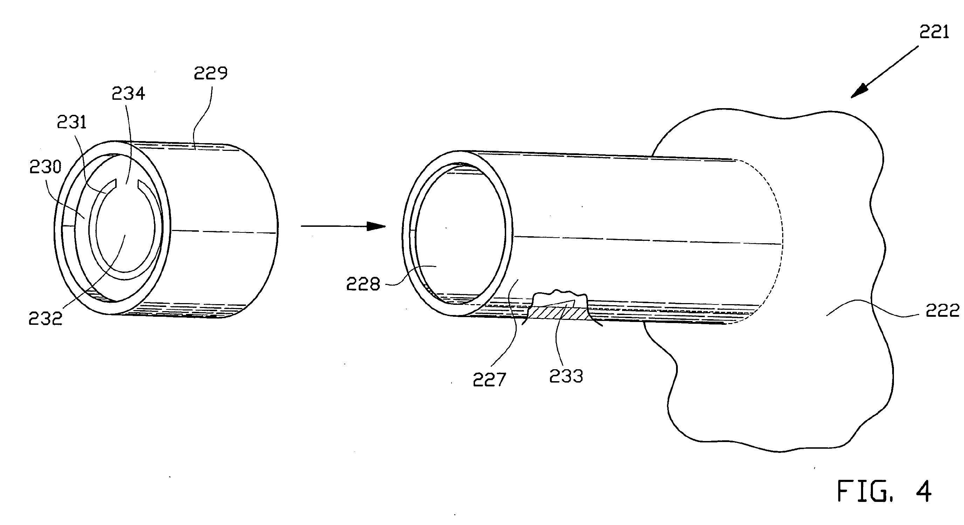

The box 221 (not entirely shown) in figure 4 has a circumferential wall 222 that is integrally formed with a bottom that is not shown. A single-part spout 227 having an opening 228 extends from the circumferential wall 222. At the inside the spout 227 comprises a schematically shown barb or clamp 233 that engages onto an inserted installation pipe for keeping the pipe connected to the spout 227. The opening 228 can be closed off with a synthetic cap 229 to be slid over the spout 227. The cylindrical cap 229 slightly clampingly abuts the outer wall of the spout 227, and at the end is provided with a sheet 230 that can be punctured by an installation pipe, in which way the spout 227 is closed off watertight.

The cap 229 and the spout 227 have been provided with indexing means (not shown) that cooperate together, such as a cam at the outer side of the spout 227 that is accommodated in a slot in the cap 229, which slot extends in the slide direction. The indexing means ensure that in the circumferential direction of the spout 227, the cap 229 can be placed on the spout 227, substantially in one position or orientation only. The sheet 230 is provided with a C-shaped or substantially circular and interrupted weakening 231, as a result of which the sheet 230 will rupture over the line of the weakening 231. In a further alternative embodiment the weakening is substantially S-shaped. The non-rupturing material, situated in the continuation of the C-shape, forms a hinge or bridge 234 to the flap 232 to be ruptured out of the sheet 230. In the radial direction or with respect to the centre line of the spout 227, said bridge 234 is situated straight across the barb 233, as a result of which the flap 232 cannot end up between the barb 233 and the inserted installation pipe. In a further alternative embodiment the weakening is V-shaped, wherein the bridge is formed at the open upper side of the V-shape.

The C-shaped, S-shaped or V-shaped weakening sits away one or several millimetres from the circumferential boundary of the sheet. Due to the free position the membrane does not rupture up to the circumferential boundary, but after insertion of the installation pipe the membrane forms a closure that is watertight, inwardly oriented and situated tightly all round against the pipe. The weakening has a thickness of a few hundredths of a millimetre.

In the examples shown one cap 129, 129 is provided per single-part spout 127, 227. Alternatively the spouts are designed so as to be multiple, wherein one cap closes off several equi-oriented spouts.

In the examples shown the cap 129, 229 slides over the spout 127, 227. Alternatively or additionally the cap comprises a circumferential surface for abutting the head end surface of the spout and an insert piece which is situated recessed with respect to the circumferential surface, which insert piece after the cap has been placed abuts the inside of the spout. The sheet may then be a part of the insert piece situated recessed.

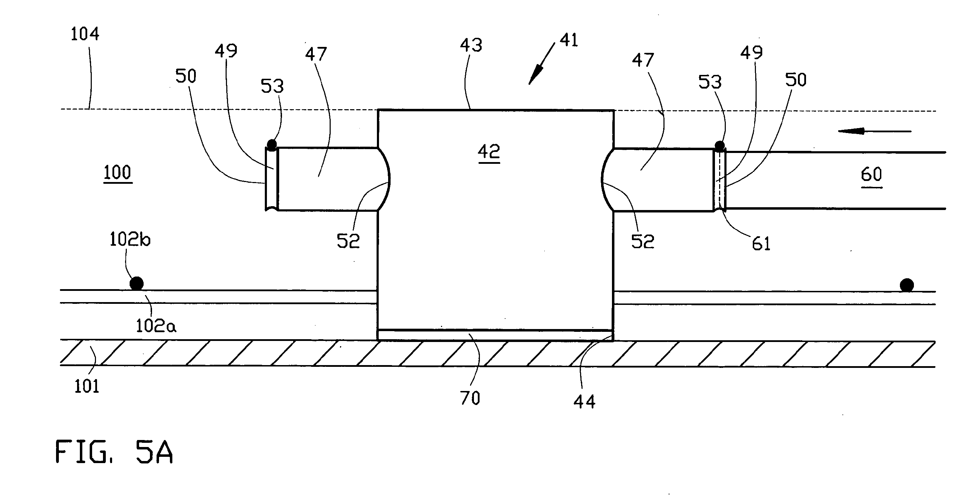

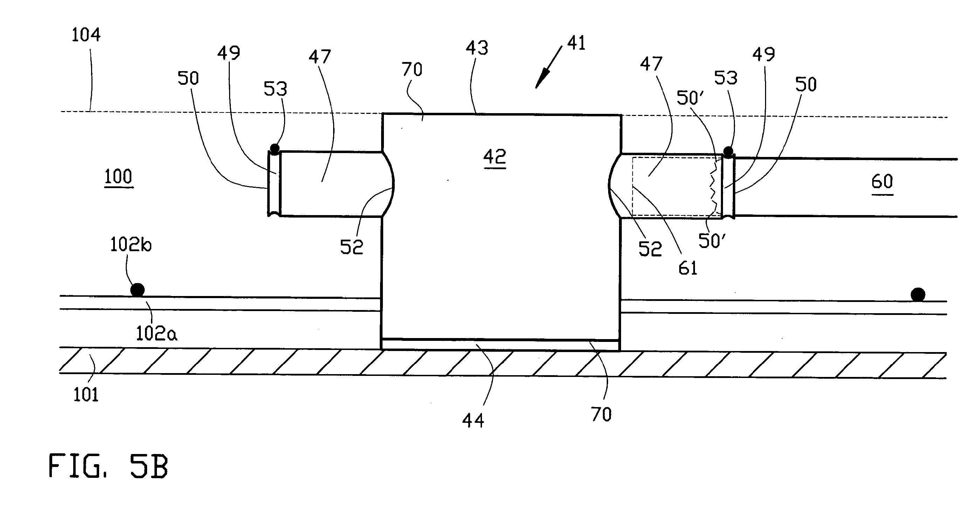

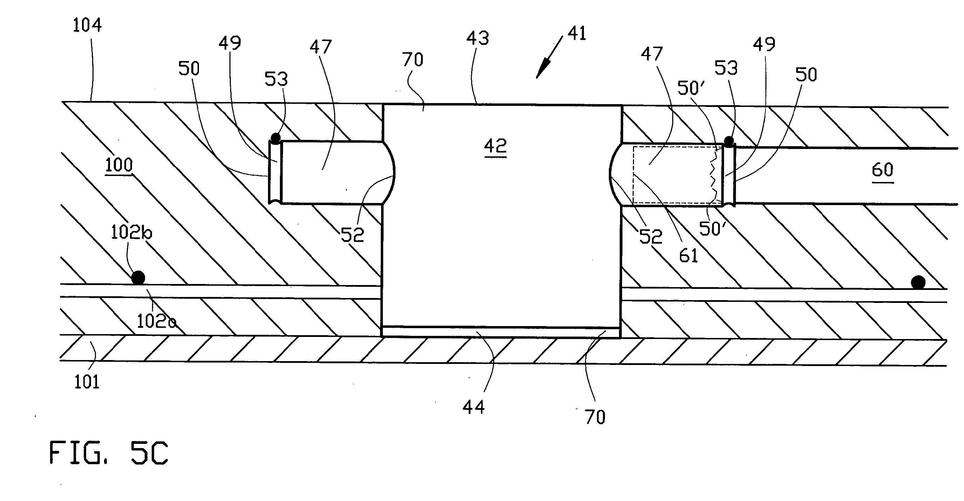

Figures 5A-C show a box 41 according to the invention, having a circumferential wall 42 and a bottom 43 integrally formed therewith. In this example two spouts 47 are integrally formed with the circumferential wall 42, which spouts 47 are provided with lid 49 at their ends, which lid by means of living hinges 53 that are integrally formed therewith, are connected to the spouts 47. The lids 49 each have a sealing sheet 50, integrally formed therewith, which sheet 50 is provided with a cross-shaped weakening, in the centre, which weakening is watertight however. Alternatively the sheet has a smaller thickness in a centre area than in areas situated near the edge, in order to form a predetermined location of rupture in the centre area.

In this example the lids 49 are placed in the closed position, wherein the spouts 47 are sealed towards the outside against water. The spouts 47 with their opposite end 52 end freely in the inside of the box 41 .

In this case the box 41 is placed in the construction project, prior to pouring concrete. Precast concrete plank 101 and a reinforcement with longitudinal reinforcement 102a and cross-reinforcement 102b set in the usual manner, are shown. The box 41 is placed in between the reinforcement, with the opening 44 placed upside-down on the plank 101, and for sealing provided with a lid 70. The level line 104 for the upper side of the concrete yet to be poured is shown.

In figure 5A an installation pipe 60 is inserted into the right-hand spout 47, the end edge 61 just abutting the sheet 50. The diameter of the pipe 60 is smaller than or equals the diameter of the sheet 50. By pushing or thrusting the pipe 60 further, optionally with a rotary motion, the sheet 50 ruptures, and it can be urged out of the way so that the pipe 60 can be slid further into the spout 47.

The situation of figure 5B is then achieved, in which it can be seen that sheet parts 50' still connected to the edge of the lid 49 nestle against the outer surface of the pipe 60.

The left-hand spout is not used in this example and remains closed by lid including sheet.

After said pre-installation operations have been carried out, the floor can be poured, in order to achieve the situation shown in figure 5C. The inside of the box 41 has remained free from concrete water. After hardening of the concrete and removing the precast concrete plank 101 the installation operations can be continued, by laying wires through the pipe 60 and box 41, unhampered by lumps or clods of mortar.

The above description is included to illustrate the operation of preferred embodiments of the invention and not to limit the scope of the invention. Starting from the above explanation many variations that fall within the spirit and scope of the present invention will be evident to an expert.

## Claims

1. Box for electric wirings, comprising a wall having a circumferential wall and a bottom wall, wherein the circumferential wall at the side facing away from the bottom defines an opening, wherein in the wall the box is provided with a spout projecting from the wall for connection to an installation pipe, wherein the spout is provided with a spout closing means comprising a membrane or sheet that can be punctured when introducing the installation pipe in the spout.

2. Box according to claim 1, wherein the membrane or sheet is provided spaced apart from the wall, wherein the membrane or sheet preferably is situated at the end of the spout.

3. Box according to claim 1 or 2, wherein the spout closing means is movable with respect to the spout, for movement of the membrane or sheet between a position that does not cover the spout and a position that covers the spout.

4. Box according to claim 3, wherein the spout closing means is movably connected to the spout, wherein the spout closing means preferably comprises a lid or cover of which the membrane or sheet is a part, wherein the lid or cover is hinged to the spout, wherein the lid or cover preferably is connected to the spout via a bending hinge or living hinge.

5. Box according to claim 3 or 4, wherein the spout closing means comprises a sealing cap for the spout of which the membrane or sheet is a part, wherein the sealing cap preferably connects clampingly or so as to fit snugly to and/or around and/or against the spout, preferably around the inside of the spout and/or the outside of the spout.

6. Box according to any one of the claims 3-5, wherein the spout closing means is provided with locking means for locking the closing position, such as a snap connection.

7. Box according to any one of the preceding claims, wherein the membrane or sheet is directly or indirectly integrally formed with the spout.

8. Box according to any one of the preceding claims, wherein the membrane or sheet forms a liquid-inhibiting sealing for the spout.

9. Box according to any one of the preceding claims, wherein the membrane or sheet after having been punctured by the installation pipe is suitable to abut the outer surface thereof.

10. Box according to any one of the preceding claims, wherein the membrane or sheet is provided with a predetermined weakening of reduced thickness, preferably in the shape of a centrally situated straight line, a cross, an S, or an area.

11. Box according to any one of the preceding claims, wherein the membrane or sheet is provided with a predetermined weakening of reduced thickness, preferably in the shape of one or several lines that define a predetermined flap in the membrane or sheet, wherein between the end points of the line or lines the membrane or sheet material forms a bridge towards the predetermined flap, wherein the predetermined weakening preferably has a substantially interrupted circular shape, a C-shape or a V-shape.

12. Box according to claim 11, wherein at the inside the spout is provided with retaining means engaging onto an installation pipe for retaining an inserted installation pipe in the spout, wherein the box is provided with indexing means that are coupled to the membrane or sheet and the spout, for with respect to the centre line of the spout bringing or retaining the bridge substantially opposite the retaining means.

13. Box according to any one of the claims 10-12, wherein the predetermined weakening lies spaced apart from the circumferential boundary of the membrane or sheet.

14. Box according to any one of the preceding claims, wherein the spout closing means comprises an edge encircling the membrane or sheet, which edge with respect to the membrane comprises rigid material.

15. Box for electric wirings, comprising a wall having a circumferential wall and a bottom wall, wherein the circumferential wall at the side facing away from the bottom defines an opening, wherein in the wall the box is provided with a preferably one-part spout, projecting from the wall and integrally formed therewith, for connection to an installation pipe, wherein spaced apart from the wall, the spout is provided with a gate sealing against liquid and puncturable by the pipe, wherein the puncturable gate preferably is made having a thickness smaller than half the thickness of the wall.

16. Box for electric wirings, comprising a wall having a circumferential wall and a bottom wall, wherein the circumferential wall at the side facing away from the bottom defines an opening, wherein in the wall the box is provided with a spout projecting from the wall for connection to an installation pipe, wherein the box furthermore comprises a spout closing means for the spout, such as a cover, lid or cap, that is movable with respect to the spout, wherein several spouts preferably each have been provided with a spout closing means.

17. Box according to claim 16, wherein the spout closing means is at least partially manufactured of material that can be broken away or punctured.

18. Box according to claim 17, wherein the spout closing means for several adjacent spouts are formed as one unity with each other.
